# EUROPEAN PATENT SPECIFICATION

(11) **EP 0 397 291 B1**
(45) Date of publication and mention of the grant of the patent: **20.10.1993**
(21) Application number: 90201771.4
(22) Date of filing: 07.04.1988
(51) Int. Cl.: B61F 5/52, B61F 5/02

(54) **Bogie for a rail vehicle**
Drehgestell für ein Schienenfahrzeug
Bogie pour un véhicule ferroviaire

(30) Priority: 16.04.1987 NL 8700924
(43) Date of publication of application: 14.11.1990
(62) Divisional of application: 88200667.9
(73) Proprietor: Stork RMO B.V., 1018 MP Amsterdam (NL)
(72) Inventor: Keizer, Cornelis Pieter, NL-3136 CL Vlaardingen (NL)
(74) Representative: Land, Addick Adrianus Gosling

(56) References cited:
- EP-A- 0 177 459
- US-A- 3 826 202

## Description

The invention relates to a bogie for a rail vehicle as disclosed in the preamble of the claim.

The bogie of this type disclosed in FR-A-2227163 takes such a rigid form that it twists hardly or not at all. The end cross beam in particular is heavily loaded when there is torsion, as this end cross beam and its connection to the longitudinal girders are robustly designed, and this makes the bogie heavy. The invention has for its purpose to provide a simple and lighter design. To this end the characterizing feature of the claim is applied. As a result the frame may twist without this causing problems at the end cross beam. Nor does the end cross beam itself need to be more robust than is required for absorption of the vertical forces caused by braking torque and/or drive torque.

EP-0 177 459 discloses a bogie having end cross beams connected to longitudinal girders by means of ball bearings providing a torsionless connection. These ball bearing connections do not provide simple connections. They result in additional manufacturing and maintenance costs.

The invention will be elucidated in the description hereinafter with reference to a drawing. In the drawing in schematic form:

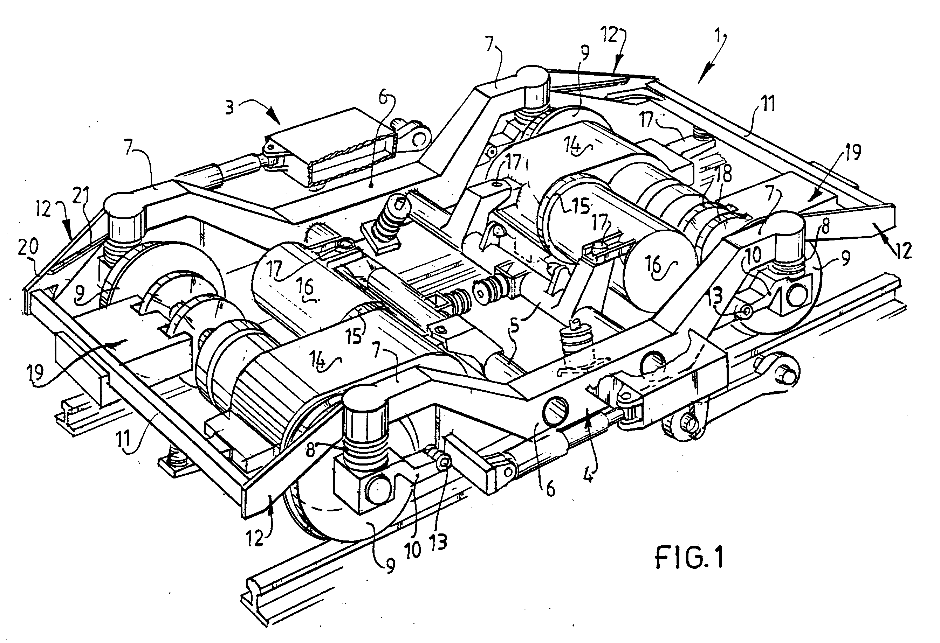

Fig. 1 shows a perspective, schematic view of a preferred embodiment of a bogie according to the invention;

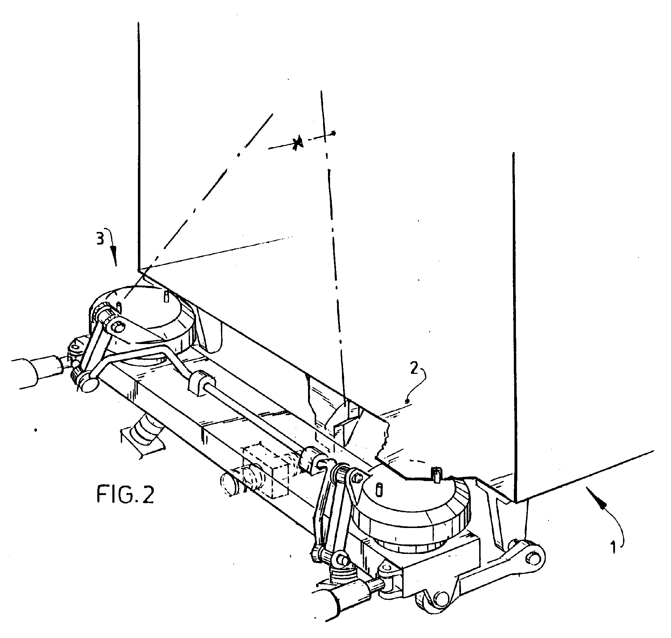

Fig. 2 shows on a larger scale a perspective view of a rail vehicle at the point of the connection between vehicle body and bogie according to the invention;

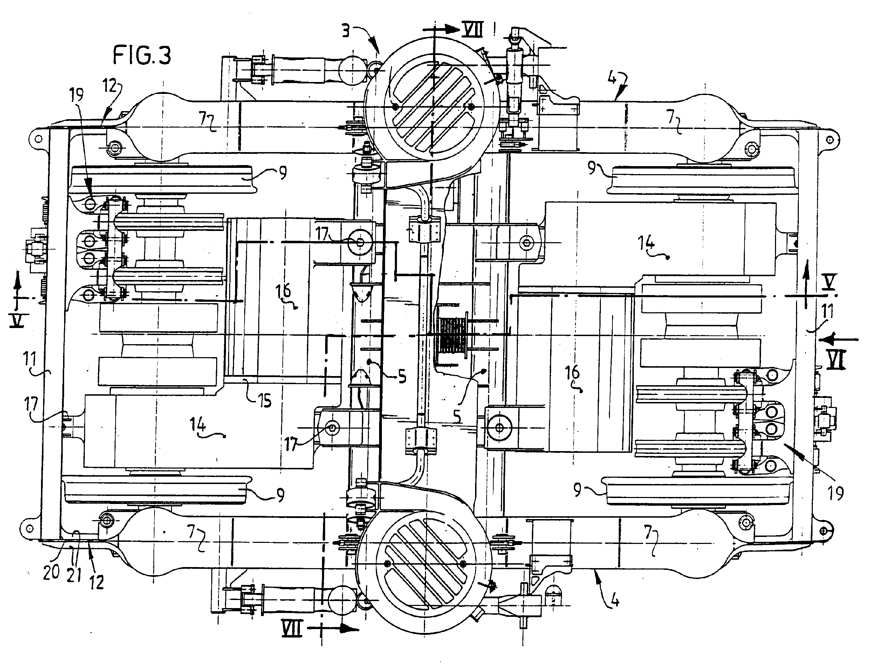

Fig. 3 is a top view of a bogie according to the invention drawn in more detail;

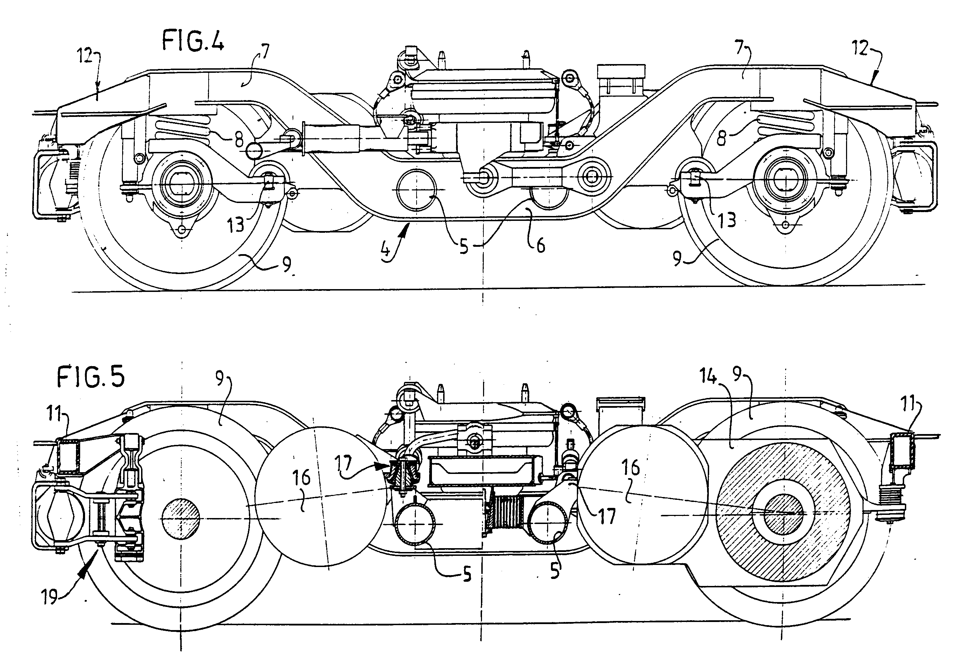

Fig. 4 is a side view of the bogie from fig. 3;
Fig. 5 is a section along line V-V from fig. 3;

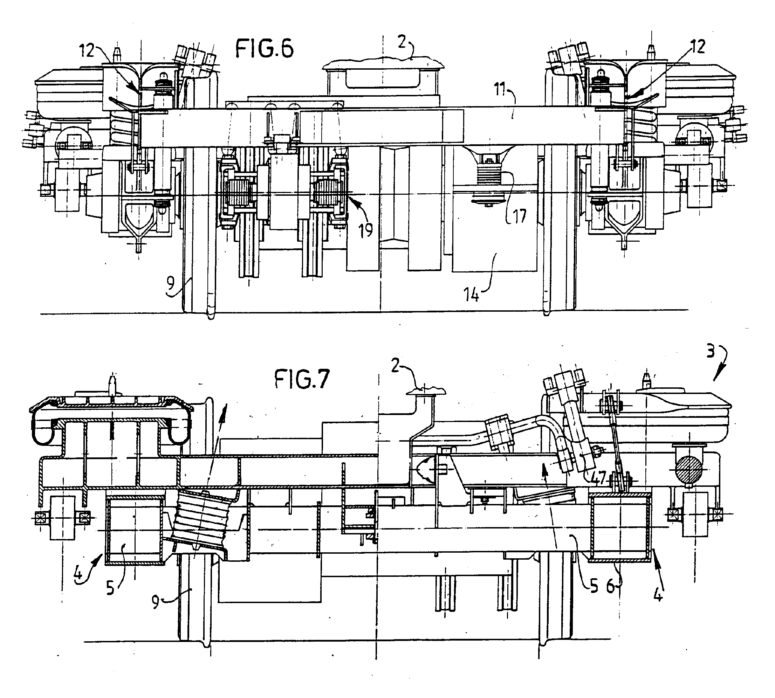

Fig. 6 is a front view along arrow VI from fig. 3; and
Fig. 7 is a section along line VII-VII from fig.3.

A rail vehicle 1 has a coach body 2 which supports on two bogies 3 according to the invention. Each body 2 has a frame 4 that is constructed from two tubular longitudinal girders 6 with swan-neck shaped ends 7, two pipe-shaped transverse girders 5, which are welded firmly to longitudinal girders 6, and two tubular end cross beams 11 which are connected via torsion slack connections 12 to both ends 7 of longitudinal girders 6. The ends 7 of longitudinal girders 6 support via spiral springs 8 on axle sets 9 which are held in place on frame 4 by means of lying swivelling arms 10 swivelling on horizontal transverse shafts 13. Each axle set 9 is driven via a drive gear 14 and an electro-motor 16 connected thereto with flange connections 15. Drive gear 14 and electro-motor 16 are supported as a unit by a transverse girder 5 and an end cross beam 11 and is connected thereto at three suspension points 17. Each axle set 9 has two brake discs co-acting with braking means 19 which are suspended on end cross beam 11. Absorbed by the end cross beam in addition to the weight of the drive unit and the braking means are the vertical forces of the drive torque and of the braking torque. While the connections 12 have a considerable bending rigidity in the vertical longitudinal plane, they are nevertheless torsion slack. They consist substantially of vertical plates 20 with cross ribs 21 which are arranged close to their neutral axis.

It is noted that both a motor bogie and a running bogie without motor can be formed as according to the invention.

## Claims

1. Bogie (3) for a rail vehicle (1) comprising a frame (4) having at least two longitudinal girders (6) and at least two transverse girders (5) and at least one end cross beam (11), wherein said end cross beam (11) is coupled via connections (12) to both ends (7) of said longitudinal girders (6), said connections having a considerable bending rigidity in the vertical longitudinal plane, characterized in that said connections comprise connection elements (12) extending in longitudinal direction of the bogie and having such profile that they combine a considerable bending rigidity in the vertical longitudinal plane with torsion slackness.

## Patentansprüche

1. Drehgestell (3) für ein Schienenfahrzeug (1) mit einem Rahmen (4) mit mindestens zwei Längsträgern (6) und mindestens zwei Querträgern (5) und mindestens einem Endquerbalken (11), bei dem der Endquerbalken (11) über Verbindungen (12) mit beiden Enden (7) der Längsträger (6) verbunden ist, wobei die Verbindungen eine wesentliche Biegesteifigkeit in der vertikalen Längsebene aufweisen, dadurch gekennzeichnet, daß die Verbindungen Verbindungselemente (12) aufweisen, die sich in Längsrichtung des Drehgestelles erstrecken und ein solches Profil aufweisen, daß sie eine deutliche Biegesteifigkeit in der vertikalen Längsebene mit Torsionsfreiheit kombinieren.

## Revendications

1. Bogie (3) pour véhicule ferroviaire (1), comprenant un châssis (4) qui comporte au moins deux poutres longitudinales (6) et au moins deux poutres transversales (5), ainsi qu'au moins une traverse d'extrémité (11), dans lequel ladite traverse d'extrémité (11) est accouplée par des liaisons (12) aux deux extrémités (7) desdites poutres longitudinales (6), lesdites liaisons ayant une rigidité considérable à la flexion dans le plan longitudinal vertical, caractérisé en ce que lesdites liaisons comprennent des éléments de liaison (12) s'étendant dans la direction longitudinale du bogie et ayant un profil tel qu'elles combinent une considérable rigidité à la torsion dans la direction longitudinale verticale à une souplesse à la torsion.
